# EUROPEAN PATENT APPLICATION

(11) **EP 4 149 062 A1**
(43) Date of publication of application: **15.03.2023**
(21) Application number: 21818917.3
(22) Date of filing: 31.05.2021
(51) Int. Cl.: H04L 12/46

(54) **DEPLOYMENT METHOD AND APPARATUS FOR VIRTUALIZED NETWORK SERVICE**

(30) Priority: 03.06.2020 CN 202010495133
(71) Applicant: Huawei Technologies Co., Ltd., Longgang District, Shenzhen, Guangdong 518129 (CN)
(72) Inventor: LI, Shitao, Shenzhen, Guangdong 518129 (CN)
(74) Representative: Pfenning, Meinig & Partner mbB
(86) International application number: PCT/CN2021/097346
(87) International publication number: WO 2021/244483

(57) **Abstract**

A virtualized network service deployment method and apparatus are disclosed. In the foregoing technical solutions, a network service descriptor NSD file is improved. For example, when at least two virtualized network function VNFs included in a to-be-deployed network service NS are connected through layer 3 links, layer 2 links, and a routing device configured to connect the layer 3 links, a network service virtual link descriptor VLD file corresponding to the NS includes information about the routing device. In this way, a connection relationship of a virtual network between the at least two VNFs is more accurate, and therefore successful deployment of the NS can be ensured.

## Description

This application claims priority to Chinese Patent Application No. 202010495133.6, filed with the China National Intellectual Property Administration on June 3, 2020, and entitled "VIRTUALIZED NETWORK SERVICE DEPLOYMENT METHOD AND APPARATUS", which is incorporated herein by reference in its entirety.

### TECHNICAL FIELD

This application relates to the field of communications technologies, and in particular, to a virtualized network service deployment method and apparatus.

### BACKGROUND

Network function virtualization (network function virtualization, NFV) is a technology in which a network operator uses universal hardware such as x86 and a virtualization technology to support software processing of a plurality of functions and implement some network functions in a universal high-performance server, a switch, and a storage device, so that high device costs of a network are reduced.

In NFV, a virtualized network service (network service, NS) is created based on a service requirement. For example, an internet protocol multimedia subsystem (internet protocol multimedia subsystem, IP IMS) network service, a next generation mobile core network (evolved packet core, EPC) network service, or the like may be created. During NS creation, a service requester needs to provide description information of virtualized network functions (virtualized network functions, VNFs) and a connection relationship between the VNFs that are used to create the NS.

In a conventional technology, the connection relationship between the VNFs is described using layer 2 links and layer 3 links between the connected VNFs, where the layer 2 link is used to represent a virtual network allocated by a switch, and the layer 3 link is used to represent a virtual link allocated by a routing device to the switch.

However, in an actual use process, the connection relationship between the VNFs may be complex. For example, a plurality of VNFs included in one NS are deployed on different racks in a data center. In this case, a connection relationship between the VNFs cannot be accurately determined by describing only information about layer 2 links or layer 3 links. Consequently, NS creation fails or a service requirement cannot be met. Therefore, how to create an NS in a complex scenario is an urgent problem to be resolved currently.

### SUMMARY

This application provides a virtualized network service deployment method and apparatus, to achieve an objective of creating an NS in a complex scenario.

According to a first aspect, a virtualized network service deployment method is provided. The method may be performed by an NFV orchestrator NFVO. In the method, after receiving a request that is for instantiating a network service NS and that includes an identifier of the network service NS, the NFVO obtains a network service descriptor NSD file corresponding to the identifier of the NS. The NSD file includes identifiers of a network service virtual link descriptor VLD file and virtualized network function descriptor VNFD files. The VNFD file is used to describe information about a virtualized network function VNF used to create the NS. VNFs included in the NS are connected through layer 3 links, layer 2 links, and a routing device configured to connect the layer 3 links. The VLD file includes information about the routing device. Then, the NFVO sends a network creation request used to create the layer 3 links, the layer 2 links, and the routing device to a virtualized infrastructure manager VIM, and sends a VNF creation request including a connection relationship between the VNFs included in the NS and the layer 2 links and/or the layer 3 links to a virtualized network function manager VNFM. After receiving a creation success response message from the VIM and a creation success response message from the VNFM, the NFVO determines that the NS is successfully deployed.

In the foregoing technical solution, the NSD file is improved. For example, when at least two VNFs included in a to-be-deployed NS are connected through layer 3 links, layer 2 links, and a routing device configured to connect the layer 3 links, a VLD file corresponding to the NS includes information about the routing device. In this way, a connection relationship of a virtual network between the at least two VNFs is more accurate, and therefore successful deployment of the NS can be ensured.

In a possible design, the information about the routing device includes information about the layer 3 links connected to the routing device and location information of the routing device.

Content included in the information about the routing device is merely an example. Certainly, other content may also be included. This is not limited herein.

In a possible design, the VLD file further includes information about the layer 2 links, the information about the layer 3 links, and a correspondence between the layer 2 links and the layer 3 links.

In the foregoing technical solution, a connection relationship between links can be described more clearly using the information about the layer 2 links and the information about the layer 3 links in the VLD file, so that the successful deployment of the NS can be further ensured.

In a possible design, the connection relationship between the VNFs included in the NS and the layer 2 links and/or the layer 3 links includes: identifiers of external interfaces of the VNFs and information about first layer 2 links and/or first layer 3 links connected to the external interfaces.

In the foregoing technical solution, since the VNFs are connected to the layer 2 links or the layer 3 links through the external interfaces, the connection relationship between the VNFs and the layer 2 links or the layer 3 links may be described using the external interfaces of the VNFs.

In a possible design, when sending the network creation request to the virtualized infrastructure manager VIM, the NFVO may separately send a first layer 2 link creation request including an identifier of the layer 2 link, a first layer 3 link creation request including an identifier of the layer 3 link and an identifier of a corresponding second layer 2 link, and a routing device creation request including the information about the routing device to the VIM. First layer 3 link creation request is used to create the corresponding layer 3 link on the second layer 2 link, and the VNFs are connected to the created layer 3 link through the routing device.

In the foregoing technical solution, a quantity of first layer 2 links and a quantity of second layer 2 links are not limited, and there may be one or more first layer 2 links and one or more second layer 2 links. When there is one first layer 2 link, the first layer 2 link is the same as the second layer 2 link. When there are a plurality of first layer 2 links, the second layer 2 link may be all or a part of the first layer 2 links. In addition, in this embodiment of this application, a sequence in which the NFVO sends the first layer 2 link creation request, the first layer 3 link creation request, and the routing device creation request is not limited. To be specific, the NFVO may first send the first layer 2 link creation request, then send the first layer 3 link creation request, and finally send the routing device creation request. Alternatively, the NFVO may first send the first layer 2 link creation request, then send the routing device creation request, and finally send the first layer 3 link creation request. In this way, flexibility of the NFVO can be improved.

In a possible design, the information about the routing device further includes configuration information and/or an identifier of the routing device. The NFVO may separately send a device creation request including the configuration information and/or the identifier and a resource update request including the information about the layer 3 links to the VIM, to implement a process of creating the routing device, where the resource update request is used to add the layer 3 links to the routing device.

In the foregoing technical solution, the process of creating the routing device needs to include processes of creating the routing device itself and connecting the created routing device to the layer 3 links.

In a possible design, the NFVO may further update the created NS. In this case, after receiving an NS update request used to update the NS, the NFVO obtains an updated NSD file corresponding to the NS based on an identifier of the updated NSD file that is included in the NS update request. The updated NSD file includes an updated VLD file and information about a VNF associated with the updated VLD file, and the updated VLD file includes an updated layer 2 link and/or an updated layer 3 link. Then, the NFVO updates, based on the updated NSD file, a connection relationship between the VNFs included in the NS.

In the foregoing technical solution, when the NS needs to be updated, only the VLD file in the NSD file other than the entire NSD file may be updated. In this way, updated content can be reduced, and the update can be sped up.

In a possible design, the information about the VNF associated with the updated VLD file includes information about an external interface of the VNF connected to the updated layer 2 link and/or information about an external interface of the VNF connected to the updated layer 3 link.

In the foregoing technical solution, a connection relationship between the VNFs and the updated layer 2 link and/or the updated layer 3 link may be described using the external interfaces of the VNFs. In this way, content included in the VLD file can be reduced, and storage space occupied by the VLD file can be reduced.

In a possible design, the NFVO may update, based on the updated NSD file, the connection relationship between the VNFs included in the NS by separately sending a second layer 2 link creation request and a second layer 3 link creation request to the VIM and sending a VNF connection update request to the VNFM. The second layer 2 link creation request includes an identifier of the updated layer 2 link, the second layer 3 link creation request includes an identifier of the updated layer 3 link and the identifier of the corresponding updated layer 2 link, and the VNF connection update request includes the identifier of the updated layer 2 link, the identifier of the updated layer 3 link, and the information about the VNF associated with the updated VLD file, so that the VNFM updates, based on the VNF connection update request, the connection relationship between the VNFs that needs to be updated.

In the foregoing technical solution, a quantity of updated layer 2 links and a quantity of updated layer 2 links are not limited, and there may be one or more updated layer 2 links. In addition, in this embodiment of this application, a sequence in which the NFVO sends the second layer 2 link creation request and the second layer 3 link creation request to the VIM and sends the VNF connection update request to the VNFM is not limited. To be specific, the NFVO may first send the second layer 2 link creation request and the second layer 3 link creation request, and then send the VNF connection update request. Alternatively, the NFVO may simultaneously send the second layer 2 link creation request, the second layer 3 link creation request, and the VNF connection update request. In this way, the flexibility of the NFVO can be improved.

According to a second aspect, a virtualized network service deployment apparatus is provided. The apparatus has a function of implementing the NFVO in the foregoing method. The function may be implemented by hardware, or may be implemented by hardware executing corresponding software. The hardware or the software includes one or more modules corresponding to the foregoing function. In a possible design, a structure of the apparatus includes a processor and a transceiver. The processor is configured to support the apparatus in performing a corresponding function in the foregoing method. The transceiver is configured to implement communication between the apparatus and the VIM and communication between the apparatus and the VNFM. The apparatus may further include a memory. The memory is configured to be coupled to the processor, and the memory stores program instructions and data that are necessary for the apparatus.

In a possible design, the apparatus includes a processor and a transceiver.

The transceiver receives, under control of the processor, a request for instantiating a network service NS, where the request includes an identifier of the NS.

The processor obtains a network service descriptor NSD file corresponding to the identifier of the NS, where the NSD file includes identifiers of a network service virtual link descriptor VLD file and virtualized network function descriptor VNFD files, the VNFD file is used to describe information about a virtualized network function VNF used to create the NS, the VLD file includes information about a routing device, the routing device is configured to connect layer 3 links, and VNFs included in the NS are connected through the layer 3 links, layer 2 links, and the routing device; sends a network creation request to a virtualized infrastructure manager VIM, where the network creation request is used to create the layer 3 links, the layer 2 links, and the routing device; sends a VNF creation request to a virtualized network function manager VNFM, where the VNF creation request includes a connection relationship between the VNFs included in the NS and the layer 2 links and/or the layer 3 links; and determines that the NS is successfully deployed.

In a possible design, the information about the routing device includes information about the layer 3 links connected to the routing device and location information of the routing device.

In a possible design, the processor sends a first layer 2 link creation request to the VIM, where the first layer 2 link creation request includes an identifier of the layer 2 link;
sends a first layer 3 link creation request to the VIM, where the first layer 3 link creation request includes an identifier of the layer 3 link and an identifier of a corresponding second layer 2 link, and the layer 3 link creation request is used to create the corresponding layer 3 link on the second layer 2 link; and
sends a routing device creation request to the VIM, where the routing device creation request includes the information about the routing device, and the VNFs are connected to the layer 3 links through the routing device.

In a possible design, the processor sends a device creation request to the VIM, where the device creation request includes configuration information and/or an identifier; and
sends a resource update request to the VIM, where the resource update request includes the information about the layer 3 links, and is used to add the layer 3 links to the routing device.

In a possible design, the transceiver receives an NS update request under control of the processor, where the NS update request is used to update the NS, and the NS update request includes an identifier of an updated NSD file corresponding to the NS; the processor obtains the updated NSD file based on the identifier of the updated NSD file, where the updated NSD file includes an updated VLD file and information about a VNF associated with the updated VLD file, and the updated VLD file includes an updated layer 2 link and/or an updated layer 3 link; and the processor updates, based on the updated NSD file, a connection relationship between the VNFs included in the NS.

In a possible design, the information about the VNF associated with the updated VLD file includes information about an external interface of the VNF connected to the updated layer 2 link and/or information about an external interface of the VNF connected to the updated layer 3 link.

In a possible design, the processor sends a second layer 2 link creation request to the VIM, where the second layer 2 link creation request includes an identifier of the updated layer 2 link;
sends a second layer 3 link creation request to the VIM, where the second layer 3 link creation request includes an identifier of the updated layer 3 link and the identifier of the corresponding updated layer 2 link; and
sends a VNF connection update request to the VNFM, where the VNF connection update request includes the identifier of the updated layer 2 link, the identifier of the updated layer 3 link, and the information about the VNF associated with the updated VLD file, so that the VNFM updates, based on the VNF connection update request, the connection relationship between the VNFs that needs to be updated.

According to a third aspect, a virtualized network service deployment apparatus is provided. The apparatus has a function of implementing the NFVO in the foregoing method. The communications apparatus may include corresponding functional modules, for example, include a receiving module, an obtaining module, a sending module, and a determining module, which are separately configured to implement the steps in the foregoing method.

In a possible design, the apparatus includes a receiving module, an obtaining module, a sending module, and a determining module.

The receiving module is configured to receive a request for instantiating a network service NS, where the request includes an identifier of the NS.

The obtaining module is configured to obtain a network service descriptor NSD file corresponding to the identifier of the NS, where the NSD file includes identifiers of a network service virtual link descriptor VLD file and virtualized network function descriptor VNFD files, the VNFD file is used to describe information about a virtualized network function VNF used to create the NS, the VLD file includes information about a routing device, the routing device is configured to connect layer 3 links, and VNFs included in the NS are connected through the layer 3 links, layer 2 links, and the routing device.

The sending module is configured to: send a network creation request to a virtualized infrastructure manager VIM, where the network creation request is used to create the layer 3 links, the layer 2 links, and the routing device; and send a VNF creation request to a virtualized network function manager VNFM, where the VNF creation request includes a connection relationship between the VNFs included in the NS and the layer 2 links and/or the layer 3 links.

The determining module is configured to determine that the NS is successfully deployed.

In a possible design, the information about the routing device includes information about the layer 3 links connected to the routing device and location information of the routing device.

In a possible design, the sending module is specifically configured to:
send a first layer 2 link creation request to the VIM, where the first layer 2 link creation request includes an identifier of the layer 2 link;
send a first layer 3 link creation request to the VIM, where the first layer 3 link creation request includes an identifier of the layer 3 link and an identifier of a corresponding second layer 2 link, and the layer 3 link creation request is used to create the corresponding layer 3 link on the second layer 2 link; and
send a routing device creation request to the VIM, where the routing device creation request includes the information about the routing device, and the VNFs are connected to the layer 3 links through the routing device.

In a possible design, the sending module is specifically configured to:
send a device creation request to the VIM, where the device creation request includes configuration information and/or an identifier; and
send a resource update request to the VIM, where the resource update request includes the information about the layer 3 links, and is used to add the layer 3 links to the routing device.

In a possible design, the receiving module is further configured to:
receive an NS update request, where the NS update request is used to update the NS, and the NS update request includes an identifier of an updated NSD file corresponding to the NS;
the obtaining module is further configured to: obtain the updated NSD file based on the identifier of the updated NSD file, where the updated NSD file includes an updated VLD file and information about a VNF associated with the updated VLD file, and the updated VLD file includes an updated layer 2 link and/or an updated layer 3 link; and
the sending module is further configured to: update, based on the updated NSD file, a connection relationship between the VNFs included in the NS.

In a possible design, the information about the VNF associated with the updated VLD file includes information about an external interface of the VNF connected to the updated layer 2 link and/or information about an external interface of the VNF connected to the updated layer 3 link.

In a possible design, the sending module is specifically configured to:
send a second layer 2 link creation request to the VIM, where the second layer 2 link creation request includes an identifier of the updated layer 2 link;
send a second layer 3 link creation request to the VIM, where the second layer 3 link creation request includes an identifier of the updated layer 3 link and the identifier of the corresponding updated layer 2 link; and
send a VNF connection update request to the VNFM, where the VNF connection update request includes the identifier of the updated layer 2 link, the identifier of the updated layer 3 link, and the information about the VNF associated with the updated VLD file, so that the VNFM updates, based on the VNF connection update request, the connection relationship between the VNFs that needs to be updated.

According to a fourth aspect, an embodiment of this application further provides a computer-readable storage medium, including instructions. When the instructions are run on a computer, the computer is enabled to perform the method performed by the NFVO in the first aspect.

According to a fifth aspect, an embodiment of this application further provides a computer-readable storage medium, including instructions. When the instructions are run on a computer, the computer is enabled to perform the method performed by the NFVO in the first aspect.

According to a sixth aspect, an embodiment of this application provides a chip system. The chip system includes a processor, and may further include a memory. The chip system is configured to implement the method performed by the NFVO in the first aspect. The chip system may include a chip, or may include a chip and another discrete component.

For beneficial effects of the second aspect to the sixth aspect and implementations of the second aspect to the sixth aspect, refer to descriptions of beneficial effects of the method in the first aspect and implementations of the first aspect.

### BRIEF DESCRIPTION OF DRAWINGS

FIG. 1 is a schematic diagram of an NFV architecture;
FIG. 2 is a flowchart of an NS deployment method;
FIG. 3A is a schematic diagram of an example in which one NS includes two VNFs deployed on a same rack in a data center;
FIG. 3B is a schematic diagram of another example in which one NS includes two VNFs deployed on a same rack in a data center;
FIG. 4 is a schematic diagram of an example in which one NS includes a plurality of VNFs deployed in different VLANs;
FIG. 5 is a flowchart of a virtualized network service deployment method according to an embodiment of this application;
FIG. 6 is a flowchart of an NS update method according to an embodiment of this application;
FIG. 7 is a schematic diagram of an example of updating a layer 2 link and a layer 3 link that are connected to a VNF 4 according to an embodiment of this application;
FIG. 8 is a schematic diagram of an example of a structure of a virtualized network service deployment apparatus according to an embodiment of this application; and
FIG. 9 is a schematic diagram of another example of a structure of a virtualized network service deployment apparatus according to an embodiment of this application.

### DESCRIPTION OF EMBODIMENTS

To make objectives, technical solutions, and advantages of embodiments of this application clearer, the following describes the technical solutions in embodiments of this application in detail with reference to accompanying drawings and specific implementations of the specification.

In embodiments of this application, "a plurality of" means two or more. In view of this, in embodiments of this application, "a plurality of" may alternatively be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship between associated objects and represents that three relationships may exist. For example, A and/or B may represent the following three cases: Only A exists, both A and B exist, and only B exists. In addition, unless otherwise specified, the character "/" generally indicates an "or" relationship between the associated objects. The terms "link" and "network" may be used interchangeably in embodiments of this application.

Unless otherwise specified, ordinal numbers such as "first" and "second" in embodiments of this application are used to distinguish between a plurality of objects, and are not intended to limit a sequence, a time sequence, priorities, or importance of the plurality of objects.

The foregoing describes some concepts in embodiments of this application, and the following describes technical features in embodiments of this application.

To reduce device costs of a network operator, it is proposed that a virtualized NS be created using an NFV architecture to implement some network functions in a network. For example, an IP IMS network service or an EPC network service may be created using the NFV architecture. In this way, costs of the network operator brought by purchasing a network device that can implement the foregoing network service functions can be reduced.

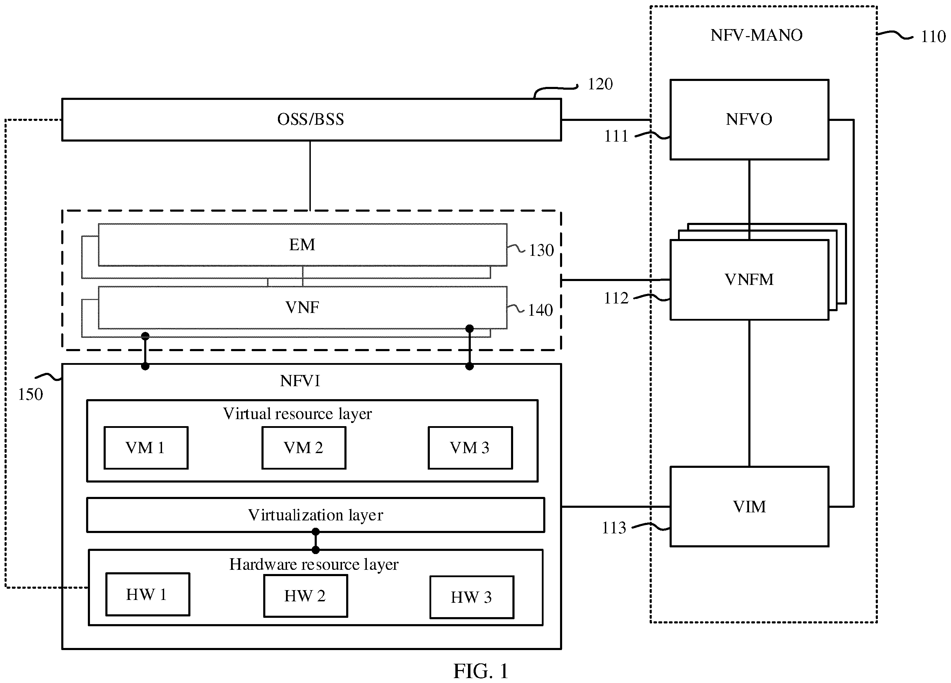

FIG. 1 is a schematic diagram of an NFV architecture. The NFV architecture may be used to implement a plurality of networks, for example, a local area network (local area network, LAN), an internet protocol (internet protocol, IP) network, an evolved packet core (evolved packet core, EPC) network, or the like.

As shown in FIG. 1, the NFV architecture may include an NFV management and orchestration system (NFV management and orchestration system, NFV-MANO) 110, one or more operation support systems/business support systems (operation support systems/business support systems, OSSs/BSSs) 120, a plurality of element management systems (element managers, EMs) 130, a plurality of VNFs 140, and an NFV infrastructure (NFV infrastructure, NFVI) 150.

The NFV-MANO 110 may include an NFV orchestrator (NFV orchestrator, NFVO) 111, one or more VNFMs 112, and a virtualized infrastructure manager (virtualized infrastructure manager, VIM) 113.

The NFVO is configured to: manage and process network service descriptors (network service descriptors, NSDs) and virtualized network function forwarding graphs (VNF forwarding graphs, VNFFGs), manage network service life cycles, and work with the VNFM to implement VNF life cycle management and a global view function of virtual resources.

The VNFM implements the VNF life cycle management, including virtualized network function descriptor (VNF descriptor, VNFD) management, VNF instantiation, VNF instance auto scaling (including scaling out/up (scaling out/up) and scaling in/down (scaling in/down)), VNF instance healing (healing), and VNF instance termination. The VNFM can further receive an auto scaling (scaling) policy delivered by the NFVO, to implement VNF auto scaling.

The VIM is mainly responsible for managing (including reserving and allocating) hardware resources and virtualized resources at an infrastructure layer, monitoring statuses of the virtualized resources and reporting faults, and providing a virtualized resource pool for upper-layer applications.

The OSS/BSS 120 is mainly oriented to a telecommunications service operator, and provides comprehensive network management and service operation functions, including network management (for example, fault monitoring and network information collection), charging management, customer service management, and the like.

The EM 130 is configured to perform conventional fault, configuration, account, performance, and security management (fault management, configuration management, account management, performance management, security management, FCAPS) functions for the VNF.

The VNF 140 corresponds to a physical network function (physical network function, PNF) in a conventional non-virtualized network. For example, the VNF 140 is a virtualized packet core (evolved packet core, EPC) node (for example, a mobility management entity (mobility management entity, MME), a serving gateway (serving gateway, SGW), or a public data network gateway (public data network gateway, PGW)). Functional behavior and a status of a network function are unrelated to whether the network function is virtualized. NFV technical requirements expect that the VNF has same functional behavior and external interfaces as the PNF.

The VNF 140 may include one or more VNF components (VNF components, VNFCs) of a lower function level. Therefore, one VNF may be deployed on a plurality of virtual machines (virtual machines, VMs), and each of the VMs carries a function of one VNFC. Alternatively, the VNF may be deployed on one VM.

The NFVI 150 may include a virtual resource layer, a virtualization layer, and a hardware (hardware) resource layer. The virtual resource layer may include a plurality of VMs, or may further include a virtual storage, a virtual network, and the like (not shown in FIG. 1). The hardware resource layer may include computing hardware, storage hardware, network hardware, and the like (not shown in FIG. 1).

Hardware at the hardware resource layer may include a dedicated processor or a general-purpose processor that is configured to provide processing and computing functions, for example, a central processing unit (central processing unit, CPU); a device configured to provide a storage capability, for example, a magnetic disk or a network attached storage (network attached storage, NAS); a switch, a router, and/or another network device.

The virtual resource layer may be provided to the VNF 140 in a form of a virtual machine. For example, one or more virtual machines form one VNF 140. The virtualization layer forms a virtual network using the hardware at the hardware resource layer, and is configured to implement communication between a plurality of virtual machines. For example, the virtual network may be implemented using a technology such as a virtual local area network (virtual local area network, VLAN), a virtual private local area network service (virtual private LAN service, VPLS), a virtual extensible local area network (virtual extensible local area network, VXLAN), or network virtualization using generic routing encapsulation (network virtualization using generic routing encapsulation, NVGRE).

The virtualization layer in the NFVI 150 is configured to abstract hardware resources at the hardware resource layer to decouple the VNF 140 from a physical layer to which the hardware resources belong, to provide virtual resources to the VNF.

The NFV-MANO 110 may be configured to implement monitoring and management of the VNF 140 and the NFVI 150. The NFVO 111 may communicate with one or more VNFMs 112 to implement a resource-related request, send configuration information to the VNFM 112, and collect status information of the VNF 140. In addition, the NFVO 111 may further communicate with the VIM 113 to allocate resources, and/or reserve and exchange configuration information and status information of virtualized hardware resources. The VNFM 112 may be configured to: manage one or more VNFs 140 and perform various management functions, for example, initiate, update, query, and/or terminate the VNF 140. The VIM 113 may be configured to control and manage interaction between the VNF 140 with the virtual resources and the hardware resources in the NFVI. For example, the VIM 113 may be configured to perform an operation of allocating resources to the VNF 140. The VNFM 112 and the VIM 113 may communicate with each other to exchange the configuration and status information of the virtualized hardware resources.

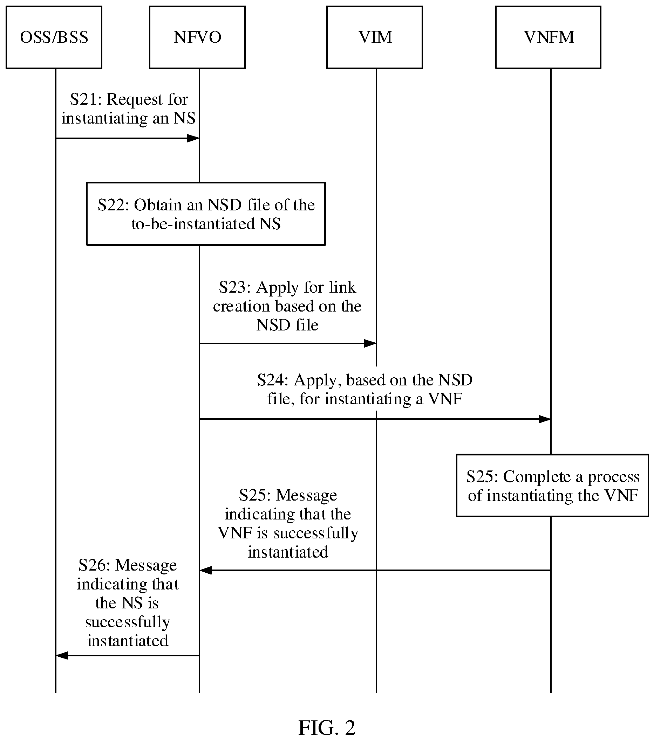

Based on the NFV architecture shown in FIG. 1, FIG. 2 is a flowchart of an NS deployment method. The flowchart is described as follows:
S21: The OSS/BSS sends a request for instantiating an NS to the NFVO.

The request for instantiating the NS may include an identifier of the to-be-instantiated NS, for example, an identity document (identity document, ID) of the to-be-instantiated NS.

S22: The NFVO obtains a network service descriptor (network service descriptor, NSD) file of the to-be-instantiated NS.

Before virtualization deployment is performed on an NS, a service requester first needs to submit an NSD file of the NS to the NFVO. The NSD file mainly describes description information (VNF descriptor, VNFD) of each VNF in several virtualized network function (virtualized network functions, VNFs) included in the NS and a topology structure between the several VNFs. The topology structure between the several VNFs may be represented using an NS virtual link descriptor (network service virtual link descriptor, NSVLD) or a VLD, and the NSVLD/VLD includes connection information between the VNFs.

To describe content included in the NSD file more clearly, the following describes the NSD file using the following two examples.

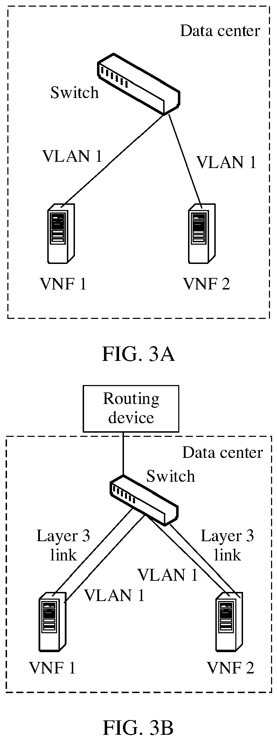

With reference to FIG. 3A, one NS includes two VNFs deployed on a same rack in a data center: a VNF 1 and a VNF 2. The VNF 1 and the VNF 2 communicate with each other through a same switch (which may be a virtual switch or a physical switch), in other words, the VNF 1 and the VNF 2 communicate with each other through a same virtual local area network (virtual local area network, VLAN). In FIG. 3A, the VLAN is denoted as a VLAN 1. In this case, an NSD file of the NS includes a VNFD 1 corresponding to the VNF 1, a VNFD 2 corresponding to the VNF 2, and connection information VLD between the VNF 1 and the VNF 2. The VLD may include the VLAN between the VNF 1 and the VNF 2, that is, the VLAN 1. Alternatively, because the VNF 1 and the VNF 2 are connected to the same VLAN, the VNF 1 and the VNF 2 may communicate based on layer 2 links. In this case, the VLD may also include the layer 2 links in the VLAN 1.

Different from the example shown in FIG. 3A, in an example shown in FIG. 3B, an upper-layer routing device of the switch connected to the VNF 1 and the VNF 2 may further allocate layer 3 links to the VNF 1 and the VNF 2. In this way, the VNF 1 and a VNF 2 may also communicate based on the layer 3 links allocated by the upper-layer routing device. Therefore, in this case, the VLD may also include the layer 3 links allocated to the VNF 1 and the VNF 2 through the upper-layer routing device.

S23: The NFVO applies to the VIM for link creation based on a VLD file.

Specifically, if the VLD file includes only layer 2 links, the NFVO applies to the VIM only for creating the layer 2 links. If the VLD file further includes layer 3 links, the NFVO needs to further create the layer 3 links after creating the layer 2 links.

S24: The NFVO applies, based on a VNFD file, to the VNFM for instantiating a VNF.

Specifically, the NFVO sends a request for instantiating the VNF to the VNFM. The request for instantiating the VNF may include an identifier of the VNF that needs to be instantiated and information about a layer 2 link and/or a layer 3 link connected to each VNF.

S25: The VNFM completes a process of instantiating the VNF, and feeds back, to the NFVO, a message indicating that the VNF is successfully instantiated.

After obtaining the request for instantiating the VNF, the VNFM applies for virtual machine resources, storage resources, network resources, and the like for each VNF based on a VNFD corresponding to an identifier of each VNF, and completes connection between the VNF and the layer 2 link and/or the layer 3 link based on the information about the layer 2 link and/or the layer 3 link connected to each VNF, to complete the process of instantiating the VNF. Then, the VNFM feeds back, to the NFVO, the message indicating that the VNF is successfully instantiated.

S26: The NFVO feeds back, to the OSSBSS, a message indicating that the NS is successfully instantiated.

After receiving the message sent by the VNFM and indicating that the VNF is successfully instantiated, the NFVO confirms that a process of instantiating the NS is completed, and feeds back, to the OSSBSS, the message indicating that the NS is successfully instantiated.

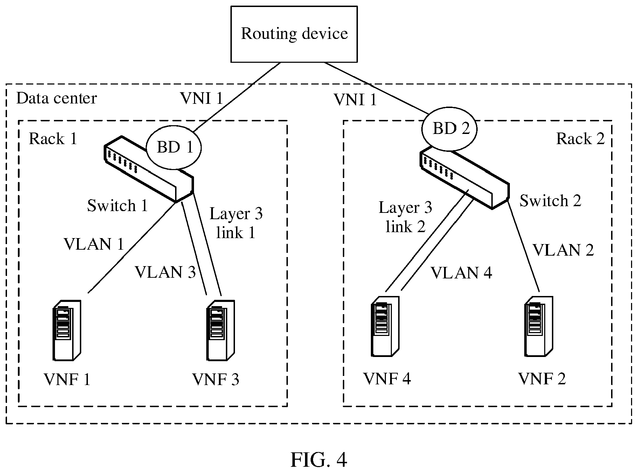

In the foregoing example, a plurality of VNFs included in one NS are deployed in a same VLAN, and layer 2 links between the plurality of VNFs included in the NS are interworked. However, in an actual use process, due to a service requirement, layer 2 links between a plurality of VNFs included in one NS may need to be isolated. In other words, the plurality of VNFs need to be deployed in different VLANs. This case is described in detail below with reference to FIG. 4.

In FIG. 4, for example, the NS includes two VNFs, which are denoted as a VNF 3 and a VNF 4. The VNF 3 is deployed on a rack 1, and the VNF 4 is deployed on a rack 2. A layer 2 link allocated by the rack 1 to the VNF 3 is denoted as a VLAN 3, and a layer 2 link allocated by the rack 2 to the VNF 4 is denoted as a VLAN 4. In this case, layer 2 links between the VNF 3 and the VNF 4 are isolated, and the VNF 3 and the VNF 4 cannot communicate with each other based on the layer 2 links. To implement communication between the VNF 3 and the VNF 4, communication links based on layer 3 links need to be created between the VNF 3 and the VNF 4. It should be noted that the layer 3 links may be allocated to the VNFs by a routing device at an upper layer of switches, or may be preconfigured for the switches. This is not limited herein. In FIG. 4, a layer 3 link allocated to the VNF 3 is denoted as a layer 3 link 1, and a layer 3 link allocated to the VNF 4 is denoted as a layer 3 link 2. For example, a switch 1 creates a bridge domain (bridge domain, BD) 1 for the VNF 3, and records, in the BD 1, information about the layer 3 link allocated to the VNF 3, where the information about the layer 3 link is, for example, an IP address of the layer 3 link 1; a switch 2 creates a BD 2 for the VNF 4, and records, in the BD 2, information about the layer 3 link allocated to the VNF 4, for example, an IP address of the layer 3 link 2. Then, the routing device at the upper layer of the switches on the racks creates a routing connection between the layer 3 link 1 and the layer 3 link 2, and creates a virtual extensible local area network (virtual extensible local area network, VXLAN) for the switch 1 and the switch 2, where the VXLAN is denoted as a VNI 1. In this way, the VNF 3 and the VNF 4 may communicate with each other based on the VLAN 3, the layer 3 link 1, the BD 1, the VNI 1, the BD 2, the layer 3 link 2, and the VLAN 4.

In a scenario shown in FIG. 4, when the NS including the VNF 3 and the VNF 4 is created using the method shown in FIG. 2, a VLD of the NS describes the layer 2 links and/or the layer 3 links between the VNF 3 and the VNF 4, in other words, the VLD includes the VLAN 3, the layer 3 link 1, the layer 3 link 2, and the VLAN 4. However, the VLD does not indicate how the plurality of links are connected. Consequently, the NS may fail to be created. It can be learned that how to create an NS in a complex scenario is an urgent problem to be resolved currently.

In view of this, an embodiment of this application provides a virtualized network service deployment method. In the method, an NSD file is improved. At least two VNFs included in a to-be-deployed NS are connected through at least two virtual links, and the at least two virtual links may include layer 2 links and/or layer 3 links. In this case, an NSD file corresponding to the NS includes a VLD file and at least one VNFD file used to describe information about the VNFs used to create the NS, and the VLD file includes information about a routing device. The routing device is configured to connect at least two layer 3 links. Then, when the NS is deployed, the corresponding virtual links and VNFs are created based on content in the NSD file. Therefore, a process of deploying the NS is completed. In other words, a connection relationship of the virtual links between the at least two VNFs is more accurate using the information about the routing device in the VLD file, and therefore successful deployment of the NS can be ensured.

It should be noted that an NS deployment example and a service scenario described in embodiments of this application are intended to describe the technical solutions in embodiments of this application more clearly, and do not constitute a limitation on the technical solutions provided in embodiments of this application. A person of ordinary skill in the art may know that, with evolution of network architectures and emergence of new service scenarios, the technical solutions provided in embodiments of this application are also applicable to similar technical problems.

The technical solutions provided in embodiments of this application are described below with reference to the accompanying drawings.

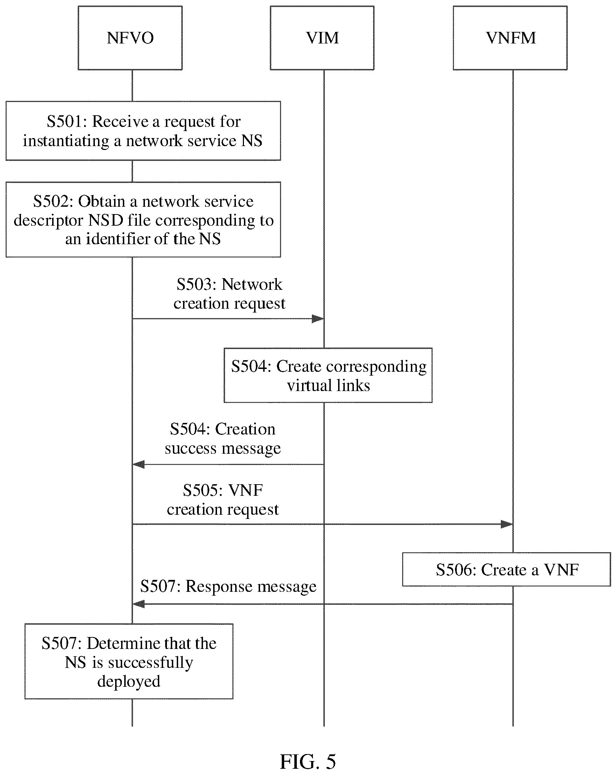

An embodiment of this application provides a virtualized network service deployment method. FIG. 5 is a flowchart of the method.

In the following description process, an example in which the method is applied to the NFV architecture shown in FIG. 1 is used. In other words, an NFVO below may be the NFVO shown in FIG. 1, and a VIM may be the VIM shown in FIG. 1. In addition, the method may be performed by two communications apparatuses. The two communications apparatuses are, for example, a first communications apparatus and a second communications apparatus. The first communications apparatus may be an NFVO or a communications apparatus that can support the NFVO in implementing functions required in the method. Certainly, the first communications apparatus may alternatively be another communications apparatus, for example, a chip system. The same is true for the second communications apparatus. For example, the second communications apparatus may be an NFVO or a communications apparatus that can support the NFVO in implementing required functions, or may be a chip system. Implementations of the first communications apparatus and the second communications apparatus are not limited herein.

S501: The NFVO receives a request for instantiating a network service NS.

In this embodiment of this application, the request for instantiating the network service NS may be initiated by the OSS/BSS in the NFV architecture shown in FIG. 1. The request for instantiating the network service NS may carry an identifier of the NS, for example, an ID or a number of the NS. After receiving the request for instantiating the network service NS, the NFVO may verify correctness of the request for instantiating the network service NS. For example, the NFVO may verify whether the identifier of the NS carried in the request for instantiating the network service NS is correct. After the verification succeeds, the NFVO performs an NS instantiation process.

S502: The NFVO obtains a network service descriptor NSD file corresponding to the identifier of the NS.

In this embodiment of this application, the NSD file corresponding to the identifier of the NS includes a VLD file and at least one VNFD file. The VLD file and the VNFD file are separately described below.

A quantity of VNFD files is the same as a quantity of VNFs included in the NS, in other words, each VNF corresponds to one VNFD, and each VNFD is used to describe information about a VNF corresponding to the VNFD. For example, in the scenario shown in FIG. 4, the NS includes the VNF 3 and the VNF 4. In this case, the NSD file includes a VNFD 3 corresponding to the VNF 3 and a VNFD 4 corresponding to the VNF 4. Each VNF includes one or more virtual deployment units (virtualization deployment units, VDUs). Therefore, the VNFD corresponding to each VNF may include information about one or more VDUs. Information about one VDU may include information about resources of at least one VM that forms the VDU. For example, information about resources of each VM may include information such as a quantity of central processing units (central processing units, CPUs), CPU performance, a memory size, bandwidth, and a storage size of the VM. Details are not described one by one herein.

The VLD file is used to describe a connection relationship of virtual links between VNFs included in the NS. Different from the VLD in the example in FIG. 2, in this embodiment of this application, the VLD file includes information about a routing device. In an example, when at least two VNFs included in the NS are connected through layer 3 links, layer 2 links, and the routing device, the routing device is configured to connect the layer 3 links. For example, in the scenario shown in FIG. 4, the NS includes the VNF 3 and the VNF 4. The VNF 3 and the VNF 4 communicate with each other through the VLAN 3, the layer 3 link 1, the VNI 1, the layer 3 link 2, and the VLAN 4 (or may be understood as being connected through the VLAN 3, the layer 3 link 1, the VNI 1, the layer 3 link 2, and the VLAN 4), and the layer 3 link 1 and the layer 3 link 2 are connected through a routing device 1. In this case, the routing device described above is the routing device 1.

In an example, the information about the routing device includes information about the layer 3 links connected to the routing device and location information of the routing device. For example, in the scenario shown in FIG. 4, the routing device 1 creates the VXLAN, namely, the VNI 1, for the switch 1 and the switch 2, and connects the layer 3 link 1 and the layer 3 link 2 through the VNI 1. In this case, layer 3 links connected to the routing device 1 are the layer 3 link 1 and the layer 3 link 2. Therefore, information about the routing device 1 may include identifiers of the layer 3 link 1 and the layer 3 link 2. For example, the identifiers of the layer 3 link 1 and the layer 3 link 2 may be IDs of the layer 3 link 1 and the layer 3 link 2 or names of the layer 3 link 1 and the layer 3 link 2. This is not limited herein. The location information of the routing device may be used to indicate whether the routing device is deployed in a switch of a rack or deployed outside a switch of a rack. In an example, a routing device deployed in a switch of a rack may be referred to as a routing device deployed in a distributed manner, and a routing device deployed above a switch of a rack may be referred to as a routing device deployed in a centralized manner. Therefore, a location of the routing device may be indicated by indicating whether the routing device is deployed in the distributed manner. For example, in the scenario described in FIG. 4, it may indicate that the routing device 1 is deployed in the switch 1 and the switch 2 by indicating that the routing device 1 is deployed in the distributed manner. Certainly, information about each routing device may further include other content, for example, may include an identifier of the routing device and a name of the routing device, or may include a configuration parameter of the routing device. The configuration parameter may be specific routing information, including a destination address of a route, a next-hop address of the route, and the like. The information about the routing device is not limited herein.

It should be noted that, in this embodiment of this application, a quantity of routing devices is not limited. In the example shown in FIG. 4, there is only one routing device. However, in another scenario, there may be a plurality of routing devices. When there are a plurality of routing devices, the VLD file may include information about the plurality of routing devices. Details are not described one by one herein.

In addition, in this embodiment of this application, the VLD file may further include information about the layer 2 links and the layer 3 links that are configured to connect the at least two VNFs. In an example, the information about the layer 2 links and the layer 3 links that connect the at least two VNFs may include information about the layer 2 links, the information about the layer 3 links, and a correspondence between the layer 2 links and the layer 3 links.

For example, in the scenario shown in FIG. 4, the layer 2 links between the VNF 3 and the VNF 4 include the VLAN 3 and the VLAN 4, and the layer 3 links include the layer 3 link 1 and the layer 3 link 2. A VNF to which the VLAN 3 is allocated communicates with a VNF to which the VLAN 4 is allocated through the layer 3 link 1 and the layer 3 link 2. In this case, the VLD file includes description information of the VLAN 3 and the VLAN 4, description information of the layer 3 link 1 and the layer 3 link 2, and a correspondence between the VLAN 3, the VLAN 4, the layer 3 link 1, and the layer 3 link 2. The description information of the VLAN 3 and the VLAN 4 may include information such as names, link types (for example, a VLAN type), and IDs of the VLAN 3 and the VLAN 4. The description information of the layer 3 link 1 and the layer 3 link 2 may include names and an internet protocol version (internet protocol version, IPVersion) of the layer 3 link 1 and the layer 3 link 2, where the IPVersion may be information such as IPv4 or IPv6. The correspondence between the VLAN 3, the VLAN 4, the layer 3 link 1, and the layer 3 link 2 may include that the VLAN 3 corresponds to the layer 3 link 1, and the VLAN 4 corresponds to the layer 3 link 2.

Certainly, the VLD file may further include other information. Details are not described one by one herein. It should be noted that if the at least two VNFs are connected through a same layer 2 link, the information about the routing device in the VLD file may be empty.

In an example, content included in the VLD file is described in detail below using a standard defined by the European Telecommunications Standards Institute (european telecommunications standards institute, ETSI) for an NFV technology as an example.

A VLD file of the ETSI NFV includes a virtual link profile (virtual link profile), and the virtual link profile includes content shown in Table 1. In Table 1, the virtual link profile includes virtual link protocol data (virtual link protocol data) information and router description (router description, routeDesc) information.

**Table 1**

| Attribute (Attribute) | Candidate value (Cardinality) | Content (Content) |
|---|---|---|
| virtualLinkProtocolData | 0 to N | VirtualLinkProtocolData |
| routeDesc | 0 to N | RouteDesc |

VirtualLinkProtocolData in Table 1 includes information about a layer 2 link and a layer 3 link, as shown in Table 2. In Table 2, L2ProtocolData includes a name (name), a network type (network type), and a segmentation identifier (segmentation ID) of the layer 2 link. The network type may also be understood as a link type, which may be, for example, a VLAN ID. L3ProtocolData includes information such as a name and an IPVersion of the layer 3 link. Details are not described one by one herein.

**Table 2**

| Attribute (Attribute) | Candidate value (Cardinality) | Content (Content) |
|---|---|---|
| 12ProtocolData | 0/1 | L2ProtocolData |
| 13ProtocolData | 0 to N | L3ProtocolData |

It should be noted that, in this embodiment of this application, the candidate value in 13ProtocolData takes a value from 0 to N, and is used to indicate that one layer 2 link may correspond to 0 or a plurality of layer 3 links. If the candidate value is 0, it indicates that the layer 2 link has no corresponding layer 3 link. If the candidate value is N, it indicates that the layer 2 link corresponds to N layer 3 links.

RouteDesc in Table 1 is used to describe information about a routing device. In an example, RouteDesc may include content shown in Table 3.

**Table 3**

| Attribute (Attribute) | Candidate value (Cardinality) | Content (Content) |
|---|---|---|
| rdld | 1 | Identifier (Identifier) |
| name | 1 | String (String) |
| 13networkName | 2 to N | String (String) |
| distributed | 0/1 | Boolean (Boolean) object |
| ... | ... | ... |

rdld represents an identifier of the routing device, and is specifically an identity; name represents a name of the routing device, and is specifically a string; 13networkName represents a name of a layer 3 link connected to the routing device, and is specifically one or more strings; distributed represents a deployment location of the routing device, and is specifically a Boolean object. For example, when a value of the attribute is 1, it indicates that the routing device is deployed in the distributed manner. Certainly, RouteDesc may further include other parameters of the routing device. Details are not described one by one herein.

Certainly, VirtualLinkProtocolData and RouteDesc may also include other content. The content in Table 1 to Table 3 is merely an example for description, and should not be understood as a limitation on VirtualLinkProtocolData and RouteDesc. In addition, in the foregoing example, virtual links that connect the VNFs include the layer 2 links and the layer 3 links. In an actual use process, the virtual links that connect the VNFs may also include other links. When the virtual links that connect the VNFs include the other links, refer to the foregoing example for content in the VLD file. Details are not described herein again.

The foregoing example describes the VLD file and the VNFD files that are included in the NSD file. In this embodiment of this application, the NSD file may further include NsVirtualLinkConnectivity information, which is used to describe connection information between the at least two VNFs included in the NS and the virtual links (virtual links). The information may be understood as a connection relationship between the VNFs included in the NS and the layer 2 links and/or the layer 3 links. In an example, the connection relationship between the VNFs included in the NS and the layer 2 links and/or the layer 3 links includes: identifiers of external interfaces of the VNFs and information about first layer 2 links and/or first layer 3 links connected to the external interfaces.

The first layer 2 links and/or the first layer 3 links are all or a part of the layer 2 links and/or the layer 3 links that connect the at least two VNFs. For example, layer 2 links and layer 3 links in a same VLAN, the first layer 2 links are the layer 2 links, and the first layer 3 links are the layer 3 links.

Content included in the NsVirtualLinkConnectivity information is described in detail using the standard defined by the ETSI for the NFV technology as an example. Refer to Table 4. Table 4 includes two pieces of information: virtualLinkConnectionInfo information and constituentCpdId information. virtualLinkConnectionInfo is used to represent information about a virtual connection, that is, information about a layer 2 link and/or a layer 3 link, and constituentCpdId represents information about an external connection point (which may be denoted as VnfExtCp) on a VNF.

**Table 4**

| Attribute (Attribute) | Candidate value (Cardinality) | Content (Content) |
|---|---|---|
| virtualLinkConnectionInfo | 1 | VirtualLinkConnectionInfoData |
| constituentCpdId | 1 to N | CpdInConstituentElement |

The candidate value of virtualLinkConnectionInfo is 1, indicating that the VNF is connected to one virtual link. VirtualLinkConnectionInfoData may include content shown in Table 5. In Table 5, virtualLinkProfileId is used to indicate an identifier of the virtual link, and may be specifically an identifier of the foregoing VLD file. L2NetworkName is used to indicate a name of the layer 2 link, and L3NetworkName is used to indicate a name of the layer 3 link.

**Table 5**

| Attribute (Attribute) | Candidate value (Cardinality) | Content (Content) |
|---|---|---|
| virtualLinkProfileId | 1 | Identifier (Identifier) |
| L2NetworkName | 1 | Layer 2 network name |
| L3NetworkName | 1 to N | Layer 3 network name |

It should be noted that the foregoing NSD file may also include other content. This is not limited herein. In addition, before step S502 is performed, the OSS/BSS has uploaded the NSD file, in other words, the NFVO has stored the NSD file. Therefore, the NFVO may obtain the stored NSD file based on the identifier of the NS.

S503: The NFVO sends a network creation request to the VIM.

In this embodiment of this application, the network creation request is used to create the layer 3 links, the layer 2 links, and the routing device. After obtaining the NSD file corresponding to the NS, the NFVO applies, based on content in the NSD file, to the VIM for creating the virtual links. For ease of understanding, an example in which layer 2 links and layer 3 links in a same VLAN is used below for description.

In an example, the NFVO first sends a first layer 2 link creation request to the VIM based on information about the layer 2 link in the VLD file, where the first layer 2 link creation request includes an identifier of the created layer 2 network. Specifically, if virtualLinkProtocolData information in the VLD file includes a plurality of pieces of L2ProtocolData information, it indicates that there are a plurality of layer 2 links, and the NFVO needs to send a plurality of first layer 2 link creation requests to the VIM, to separately establish the plurality of layer 2 links.

Then, the NFVO sends at least one first layer 3 link creation request to the VIM based on the information about the layer 2 link and information about the layer 3 link in the VLD file. The first layer 3 link creation request includes an identifier of the layer 3 link and an identifier of a corresponding second layer 2 link, and is used to create the layer 3 link on the first layer 2 link. The first layer 2 network is one or more of at least one layer 2 link included in the VLD file. Specifically, the NFVO creates the layer 3 links based on L3ProtocolData and corresponding L2ProtocolData in virtualLinkProtocolData in the VLD file. In addition, in this embodiment of this application, a quantity of layer 3 links is expanded. The NFVO may be allowed to create a plurality of layer 3 links on one layer 2 link. In other words, different layer 3 links may be created on a same layer 2 link.

Finally, the NFVO sends a network routing device creation request to the VIM based on the information about the routing device in the VLD file. The routing device creation request includes the information about the routing device. Specifically, the NFVO may directly send the routing device creation request that includes the information about the routing device. Alternatively, the information about the routing device further includes configuration information and/or a name of the routing device and/or information about the successfully created layer 3 links. In this case, the NFVO may alternatively first send a device creation request to the VIM based on distributed information and name information in routeDesc information of the VLD file, where the device creation request includes the configuration information and/or an identifier of the routing device, to create the routing device. Optionally, based on the information about the successfully created layer 3 links included in the routing device, the VIM adds the layer 3 links to the created routing device. Alternatively, the device creation request does not include the information about the successfully created layer 3 links. After the routing device is successfully created, the NFVO sends a resource update request to the VIM based on the successfully created layer 3 links. The resource update request includes the information about the layer 3 links corresponding to the routing device, and is used to add the layer 3 links to the created routing device. For example, in the scenario in FIG. 4, the layer 3 link 1 and the layer 3 link 2 need to be added to the routing device 1. Creating the routing device mentioned above refers to creating an independent software-based routing device (virtual routing device) on a physical routing device in a data center.

After receiving the routing device creation request, the VIM may send the routing device creation request to a software defined network (software defined network, SDN) controller, and the SDN controller creates the routing device. After successfully creating the routing device, the SDN controller may send creation success response information to the VIM. After receiving the response information, the VIM determines that the routing device is successfully created.

It should be noted that a sequence in which the NFVO sends the first layer 3 link creation request and the routing device creation request is not limited in this embodiment of this application. To be specific, the NFVO may first send the first layer 3 link creation request, and then send the routing device creation request. Alternatively, the NFVO may first send the routing device creation request, and then send the first layer 3 link creation request. Alternatively, the NFVO may simultaneously send the foregoing different requests. This is not limited herein.

S504: The VIM creates the corresponding virtual links, and feeds back a creation success message to the NFVO.

After receiving the link creation request and the routing device creation request that are sent by the NFVO, the VIM creates the corresponding virtual links based on the link creation request, creates the routing device based on the routing device creation request, and feeds back the creation success message to the NFVO after the creation succeeds.

S505: The NFVO sends a VNF creation request to the VNFM.

Specifically, the NFVO first applies to the VNFM for an identifier of a VNF, for example, an ID of a VNF instance, based on an identifier of a VNFD file in the NSD file. After obtaining the identifier of the VNF, the NFVO sends the VNF creation request to the VNFM. In this embodiment of this application, because the NS includes a plurality of VNFs, the NFVO may send a plurality of VNF creation requests to the VNFM. The VNF creation requests each include an identifier of a VNF and a connection relationship between the VNF and a layer 2 link and/or a layer 3 link. In an example, the connection relationship between the VNF and the layer 2 link and/or the layer 3 link may be obtained from NsVirtualLinkConnectivity information corresponding to the VNF. The NsVirtualLinkConnectivity information further includes a constituentCpdId field, and the field indicates information about a corresponding external connection point on the VNF. virtualLinkConnectionInfo is information about a corresponding virtual link that needs to be connected to the external connection point. Then, the NFVO adds L2NetworkName and L3NetworkName information included in virtualLinkConnectionInfo to the VNF creation request. For example, the NFVO may add the L2NetworkName and L3NetworkName information to an ExtVirtualLinkData parameter in the VNF creation request.

It should be noted that an execution sequence of step S503 and step S505 is not limited in this embodiment of this application. To be specific, the NFVO may first perform step S503, and then perform step S505 after receiving the virtual link creation success message fed back by the VIM. Alternatively, the NFVO may synchronously perform step S503 and step S505, or the NFVO may first perform step S505 and then perform step S503. In FIG. 5, an example in which step S503 is performed before step S505 is used.

S506: The VNFM creates the VNF.

After receiving the VNF creation request, the VNFM applies, based on the VNF creation request, to the VIM for resources required by the VNF, for example, virtual machine resources, storage resources, and network resources of the VNF, to create the VNF, and completes connection between the VNF and a related layer 2 network and layer 3 network based on information about the layer 2 network and information about the layer 3 network that are carried in the VNF creation request, to complete a VNF creation process.

Certainly, if the NS includes a plurality of VNFs, step S505 and step S506 need to be repeatedly performed for a plurality of times, to create each VNF included in the NS. Details are not described herein again. In FIG. 5, an example in which one VNF is created is used for description.

S507: The VNFM sends a response message to the NFVO, and the NFVO determines that the NS is successfully deployed.

After creating all the VNFs included in the NS, the VNFM sends the response message to the NFVO. The response message is used to indicate that all the VNFs included in the NS are successfully created. After receiving the response message, the NFVO determines that the NS is successfully deployed.

In the foregoing example, a connection relationship of the virtual links between the at least two VNFs is more accurate using the information about the routing device included in the VLD file, and therefore successful deployment of the NS in a complex scenario can also be ensured.

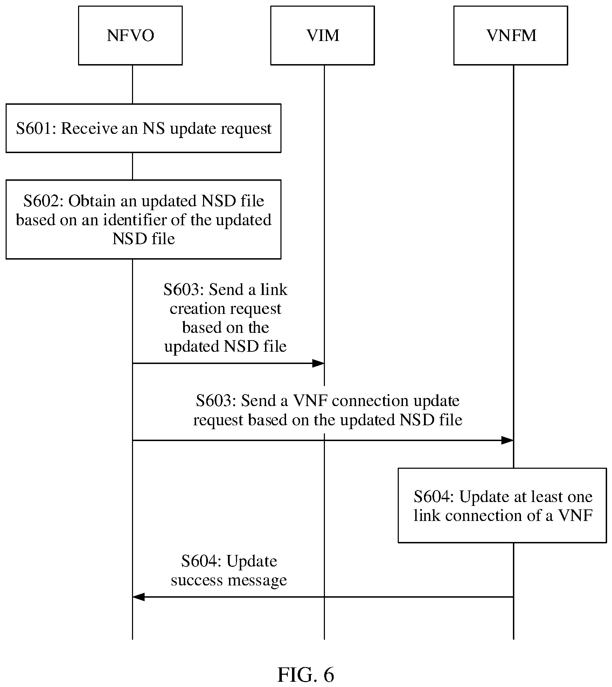

In an actual use process, the NS may vary based on service requirements. In this case, the NS needs to be updated. An NS update process is described below. FIG. 6 is a flowchart of an NS update method according to an embodiment of this application. The flowchart is described as follows:

S601: An NFVO receives an NS update request.

In this embodiment of this application, the NS update request includes an identifier of an updated NSD file corresponding to an NS. For example, if an NSD file of the NS needs to be updated from an NSD file 1 to an NSD file 2, the NS update request includes an identifier of the NSD file 2.

S602: The NFVO obtains the updated NSD file based on the identifier of the updated NSD file.

In this embodiment of this application, the updated NSD file may include but is not limited to the following two cases:

### Case 1:

A VLD file and VNFD files are in a coupling relationship, in other words, one NSD file needs to include one VLD file and at least two VNFD files. In this case, an updated NSD file also includes one VLD file and at least two VNFD files. If the NS update request is only used to update at least one virtual link between VNFs included in the NS, VNFD files included in an NSD file before update are the same as VNFD files included in the updated NSD file.

### Case 2:

A VLD file and VNFD files are in a decoupling relationship, in other words, the VLD file may be used as an independently deployed file. In this case, when an NSD file is deployed, only a binding relationship between the VLD file and the VNFD files needs to be selected, and a same VLD file may be bound to a plurality of VNFD files. In this way, storage resources of the NFVO that are occupied by duplicate VLD files can be reduced.

In this case, if the NS update request is only used to update at least one virtual link between VNFs included in the NS, in other words, only used to update a VLD file, the updated NSD file may include only an updated VLD file and information about a VNF associated with the updated VLD file, and the updated VLD file includes at least one updated virtual link. In this way, it is unnecessary to update the entire NSD file, and therefore updated content can be reduced, and the update can be sped up.

It should be noted that, in the example shown in FIG. 5, a relationship between the VLD file and the VNFD files may be any relationship of the foregoing two examples. This is not limited herein.

The case 2 is used as an example below to describe the updated NSD file.

In an example, if the at least one updated virtual link includes an updated layer 2 link and/or an updated layer 3 link, the updated VLD file includes information about the updated layer 2 link and/or the updated layer 3 link, and the information about the VNF associated with the updated VLD file. The information about the VNF associated with the updated VLD file includes information about an external interface of the VNF connected to the updated layer 2 link and/or information about an external interface of the VNF connected to the updated layer 3 link.

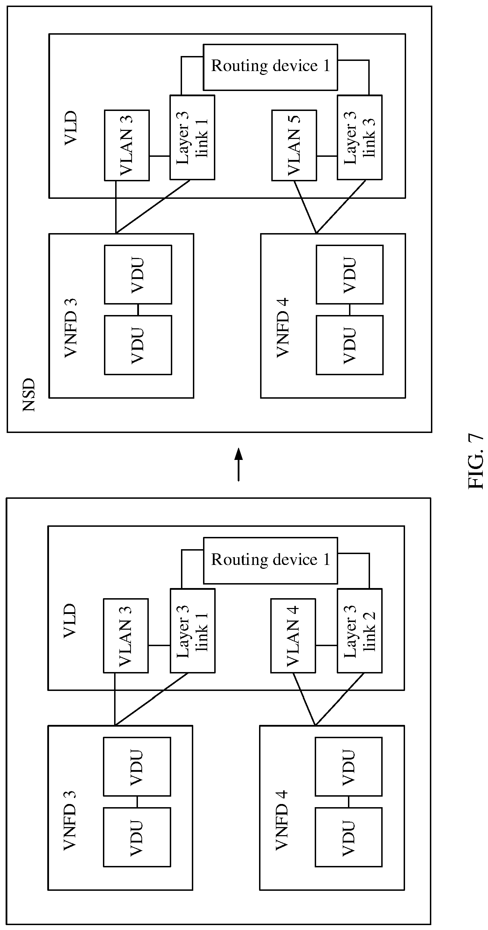

For example, with reference to FIG. 7, the NS update request is used to update a layer 2 link and a layer 3 link that are connected to a VNF 4. For example, the layer 2 link of the VNF 4 is updated from a VLAN 4 to a VLAN 5, and the layer 3 link of the VNF 4 is updated from a layer 3 link 2 to a layer 3 link 3. In this case, the updated VLD file includes information about the VLAN 5 and information about the layer 3 link 3. Specific content is similar to the content in Table 1 to Table 3. Details are not described herein again. In addition, the updated VLD file further includes the information about the VNF associated with the updated VLD file. Specifically, the information about the VNF associated with the updated VLD file may include names of the VLAN 5 and the layer 3 link 3, and is used to update L2NetworkName and L3NetworkName in VirtualLinkConnectionInfoData information in a VNFD file corresponding to the VNF 4. Certainly, if a plurality of layer 3 links need to be updated, names of a plurality of updated layer 3 links need to be listed in the information about the VNF associated with the updated VLD file.

It should be noted that the updated NSD file is uploaded to an OSS/BSS before step S602.

S603: The NFVO separately sends a link creation request to a VIM and a VNF connection update request to a VNFM based on the updated NSD file, to update at least one link connection of the VNF.

Specifically, if the at least one updated virtual link includes the updated layer 2 link and/or the updated layer 3 link, the NFVO first needs to apply to the VIM for creating the updated layer 2 network and the updated layer 3 network. For example, the NFVO sends a second layer 2 link creation request to the VIM, where the second layer 2 link creation request includes an identifier of the updated layer 2 link; and sends a second layer 3 link creation request to the VIM, where the second layer 3 link creation request includes a name of the updated layer 3 network and the identifier of the updated layer 2 network. Then, the NFVO sends the VNF connection update request to the VNFM. The VNF connection update request includes the identifier of the updated layer 2 link, an identifier of the updated layer 3 link, and the information about the VNF associated with the updated VLD file. For example, the L2NetworkName and L3NetworkName information included in the updated VLD file may be added to an ExtVirtualLinkData parameter of the VNF connection update request. This process is similar to corresponding content in step S503, and details are not described herein again.

S604: The VNFM updates the at least one link connection of the VNF, and feeds back an update success message to the NFVO.

Specifically, after receiving the second layer 2 link creation request and the second layer 3 link creation request, the VNFM first creates the updated layer 2 link and the updated layer 3 link, and then updates connections between the VNF and the virtual links based on the received VNF connection update request. This process is similar to corresponding content in step S504, and details are not described herein again.

In the foregoing technical solutions, the VLD file is decoupled from the VNFD files by separately deploying the VLD file, so that a virtual network of the NS can be updated without affecting a deployment status of the VNF, and efficiency of updating the NS can be improved.

It should be noted that, in an actual use process, the embodiments shown in FIG. 5 and FIG. 6 may be combined. In other words, an NS is deployed using the embodiment shown in FIG. 5, and the NS is updated using the embodiment shown in FIG. 6.

In the foregoing embodiments provided in this application, the method provided in embodiments of this application is separately described from perspectives of the NFVO, the VIM, the VNFM, and interaction between the NFVO, the VIM, and the VNFM. To implement functions of the NFVO in the method provided in embodiments of this application, the NFVO may include a hardware structure and/or a software module, to implement the foregoing functions using the hardware structure, the software module, or a combination of the hardware structure and the software module. Whether a function in the foregoing functions is performed using the hardware structure, the software module, or the combination of the hardware structure and the software module depends on particular applications and design constraints of the technical solutions.

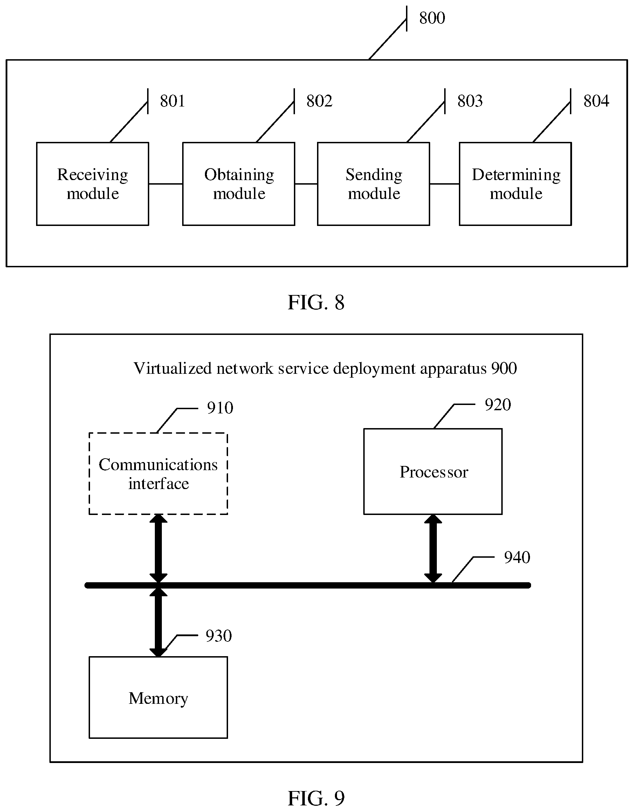

FIG. 8 is a schematic diagram of a structure of a virtualized network service deployment apparatus 800. The virtualized network service deployment apparatus 800 may be an NFVO, and can implement functions of the NFVO in the method provided in embodiments of this application. Alternatively, the virtualized network service deployment apparatus 800 may be an apparatus that can support the NFVO in implementing the functions of the NFVO in the method provided in embodiments of this application. The virtualized network service deployment apparatus 800 may be a hardware structure, a software module, or a combination of a hardware structure and a software module. The virtualized network service deployment apparatus 800 may be implemented by a chip system. In this embodiment of this application, the chip system may include a chip, or may include a chip and another discrete component.

The virtualized network service deployment apparatus 800 may include a receiving module 801, an obtaining module 802, a sending module 803, and a determining module 804.

The receiving module 801 may be configured to perform step S501, step S504, and step S507 in the embodiment shown in FIG. 5, or may be configured to perform step S601 and step S604 in the embodiment shown in FIG. 6, and/or configured to support another process of the technology described in this specification.

The obtaining module 802 may be configured to perform step S502 in the embodiment shown in FIG. 5, or may be configured to perform step S602 in the embodiment shown in FIG. 6, and/or configured to support another process of the technology described in this specification.

The sending module 803 may be configured to perform step S503 and step S505 in the embodiment shown in FIG. 5, or may be configured to perform step S603 in the embodiment shown in FIG. 6, and/or configured to support another process of the technology described in this specification.

The determining module 804 may be configured to perform step S503 and step S507 in the embodiment shown in FIG. 5, and/or configured to support another process of the technology described in this specification.

The receiving module 801 and the sending module 803 are used by the virtualized network service deployment apparatus 800 to communicate with another module. The receiving module and the sending module may be circuits, components, interfaces, buses, software modules, transceivers, or other apparatuses that can implement communication.

All related content of the steps in the foregoing method embodiments may be cited in function descriptions of corresponding functional modules. Details are not described herein again.

Division into modules in embodiments of this application is an example, is merely logical function division, and may be other division during actual implementation. In addition, the functional modules in embodiments of this application may be integrated into one processor, or each of the modules may exist alone physically, or two or more modules may be integrated into one module. The integrated module may be implemented in a form of hardware, or may be implemented in a form of a software functional module.

FIG. 9 shows a virtualized network service deployment apparatus 900 according to an embodiment of this application. The virtualized network service deployment apparatus 900 may be the NFVO in the embodiment shown in FIG. 5 or FIG. 6, and can implement functions of the NFVO in the method provided in embodiments of this application. Alternatively, the virtualized network service deployment apparatus 900 may be an apparatus that can support the NFVO in implementing the functions of the NFVO in the method provided in embodiments of this application. The virtualized network service deployment apparatus 900 may be a chip system. In this embodiment of this application, the chip system may include a chip, or may include a chip and another discrete component.

The virtualized network service deployment apparatus 900 includes at least one processor 920 configured to implement or support the virtualized network service deployment apparatus 900 in implementing functions of the VNFM in the method provided in embodiments of this application. For example, the processor 920 may determine a resource required for instantiating a VNF For details, refer to detailed descriptions in the method examples. Details are not described herein.

The virtualized network service deployment apparatus 900 may further include at least one memory 930 configured to store program instructions and/or data. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may operate cooperatively with the memory 930. The processor 920 may execute the program instructions stored in the memory 930. At least one of the at least one memory may be included in the processor.

The virtualized network service deployment apparatus 900 may further include a communications interface 910 configured to support communication with another device through a transmission medium, so that an apparatus in the virtualized network service deployment apparatus 900 can communicate with the another device. For example, the another device may be a control device. The processor 920 may send and receive data using the communications interface 910.

This embodiment of this application does not limit a specific connection medium between the communications interface 910, the processor 920, and the memory 930. In this embodiment of this application, in FIG. 9, the memory 930, the processor 920, and the communications interface 910 are connected through a bus 940, and the bus is represented using a bold line in FIG. 9. A connection manner between other components is merely an example for description, and imposes no limitation. The bus may be classified into an address bus, a data bus, a control bus, and the like. For ease of representation, only one bold line is used to represent the bus in FIG. 9, but this does not mean that there is only one bus or only one type of bus.

In this embodiment of this application, the processor 920 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed using a combination of hardware in the processor and a software module.

In this embodiment of this application, the memory 930 may be a non-volatile memory such as a hard disk drive (hard disk drive, HDD) or a solid-state drive (solid-state drive, SSD), or may be a volatile memory (volatile memory) such as a random access memory (random access memory, RAM). The memory is any other medium that can carry or store expected program code in an instruction form or a data structure form and that can be accessed by a computer, but is not limited thereto. The memory in this embodiment of this application may alternatively be a circuit or any other apparatus that can implement a storage function, and is configured to store the program instructions and/or the data.

An embodiment of this application further provides a computer-readable storage medium, including instructions. When the instructions are run on a computer, the computer is enabled to perform the methods performed by the NFVO in the embodiments shown in FIG. 5 and FIG. 6.

An embodiment of this application further provides a computer program product, including instructions. When the computer program product runs on a computer, the computer is enabled to perform the methods performed by the NFVO in the embodiments shown in FIG. 5 and FIG. 6.

An embodiment of this application provides a chip system. The chip system includes a processor and may further include a memory, and is configured to implement functions of the NFVO in the foregoing method. The chip system may include a chip, or may include a chip and another discrete component.

An embodiment of this application provides a system. The system includes the foregoing NFVO and another device, and the another device may be a VIM, a VNFM, and/or the like.

All or some of the methods in embodiments of this application may be implemented through software, hardware, firmware, or any combination thereof. When software or firmware is used to implement the methods, all or some of the methods may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible to the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

Clearly, a person skilled in the art may make various modifications and variations to this application without departing from the scope of this application. This application is intended to cover these modifications and variations of this application provided that they fall within the scope of protection defined by the following claims of this application and their equivalent technologies.

## Claims

1. A virtualized network service deployment method, comprising:
receiving a request for instantiating a network service NS, wherein the request comprises an identifier of the NS;
obtaining a network service descriptor NSD file corresponding to the identifier of the NS, wherein the NSD file comprises identifiers of a network service virtual link descriptor VLD file and virtualized network function descriptor VNFD files, the VNFD file is used to describe information about a virtualized network function VNF used to create the NS, the VLD file comprises information about a routing device, the routing device is configured to connect layer 3 links, and VNFs comprised in the NS are connected through the layer 3 links, layer 2 links, and the routing device;
sending a network creation request to a virtualized infrastructure manager VIM, wherein the network creation request is used to create the layer 3 links, the layer 2 links, and the routing device;
sending a VNF creation request to a virtualized network function manager VNFM, wherein the VNF creation request comprises a connection relationship between the VNFs comprised in the NS and the layer 2 links and/or the layer 3 links; and
determining that the NS is successfully deployed.

2. The method according to claim 1, wherein the information about the routing device comprises information about the layer 3 links connected to the routing device and location information of the routing device.

3. The method according to claim 1 or 2, wherein the VLD file further comprises information about the layer 2 links, the information about the layer 3 links, and a correspondence between the layer 2 links and the layer 3 links.

4. The method according to any one of claims 1 to 3, wherein the connection relationship between the VNFs comprised in the NS and the layer 2 links and/or the layer 3 links comprises: identifiers of external interfaces of the VNFs and information about first layer 2 links and/or first layer 3 links connected to the external interfaces.

5. The method according to any one of claims 1 to 4, wherein the sending a network creation request to a virtualized infrastructure manager VIM comprises:
sending a first layer 2 link creation request to the VIM, wherein the first layer 2 link creation request comprises an identifier of the first layer 2 link;
sending a first layer 3 link creation request to the VIM, wherein the first layer 3 link creation request comprises an identifier of the first layer 3 link and an identifier of a corresponding second layer 2 link, and the first layer 3 link creation request is used to create the corresponding layer 3 link on the second layer 2 link; and
sending a routing device creation request to the VIM, wherein the routing device creation request comprises the information about the routing device, and the VNFs are connected to the layer 3 links through the routing device.

6. The method according to claim 5, wherein the information about the routing device further comprises configuration information and/or an identifier of the routing device, and the sending a routing device creation request to the VIM comprises:
sending a device creation request to the VIM, wherein the device creation request comprises the configuration information and/or the identifier; and
sending a resource update request to the VIM, wherein the resource update request comprises the information about the layer 3 links, and is used to add the layer 3 links to the routing device.

7. The method according to any one of claims 1 to 6, wherein the method further comprises:
receiving an NS update request, wherein the NS update request is used to update the NS, and the NS update request comprises an identifier of an updated NSD file corresponding to the NS;
obtaining the updated NSD file based on the identifier of the updated NSD file, wherein the updated NSD file comprises an updated VLD file and information about a VNF associated with the updated VLD file, and the updated VLD file comprises an updated layer 2 link and/or an updated layer 3 link; and
updating, based on the updated NSD file, a connection relationship between the VNFs comprised in the NS.

8. The method according to claim 7, wherein the information about the VNF associated with the updated VLD file comprises information about an external interface of the VNF connected to the updated layer 2 link and/or information about an external interface of the VNF connected to the updated layer 3 link.

9. The method according to claim 8, wherein the updating, based on the updated NSD file, a connection relationship between the VNFs comprised in the NS comprises:
sending a second layer 2 link creation request to the VIM, wherein the second layer 2 link creation request comprises an identifier of the updated layer 2 link;
sending a second layer 3 link creation request to the VIM, wherein the second layer 3 link creation request comprises an identifier of the updated layer 3 link and the identifier of the corresponding updated layer 2 link; and
sending a VNF connection update request to the VNFM, wherein the VNF connection update request comprises the identifier of the updated layer 2 link, the identifier of the updated layer 3 link, and the information about the VNF associated with the updated VLD file, so that the VNFM updates, based on the VNF connection update request, the connection relationship between the VNFs that needs to be updated.

10. A virtualized network service deployment apparatus, comprising:
a receiving module, configured to receive a request for instantiating a network service NS, wherein the request comprises an identifier of the NS;
an obtaining module, configured to obtain a network service descriptor NSD file corresponding to the identifier of the NS, wherein the NSD file comprises identifiers of a network service virtual link descriptor VLD file and virtualized network function descriptor VNFD files, the VNFD file is used to describe information about a virtualized network function VNF used to create the NS, the VLD file comprises information about a routing device, the routing device is configured to connect layer 3 links, and VNFs comprised in the NS are connected through the layer 3 links, layer 2 links, and the routing device;
a sending module, configured to: send a network creation request to a virtualized infrastructure manager VIM, wherein the network creation request is used to create the layer 3 links, the layer 2 links, and the routing device; and send a VNF creation request to a virtualized network function manager VNFM, wherein the VNF creation request comprises a connection relationship between the VNFs comprised in the NS and the layer 2 links and/or the layer 3 links; and
a determining module, configured to determine that the NS is successfully deployed.

11. The apparatus according to claim 10, wherein the information about the routing device comprises information about the layer 3 links connected to the routing device and location information of the routing device.

12. The apparatus according to claim 10 or 11, wherein the sending module is specifically configured to:
send a first layer 2 link creation request to the VIM, wherein the first layer 2 link creation request comprises an identifier of the layer 2 link;
send a first layer 3 link creation request to the VIM, wherein the first layer 3 link creation request comprises an identifier of the layer 3 link and an identifier of a corresponding second layer 2 link, and the layer 3 link creation request is used to create the corresponding layer 3 link on the second layer 2 link; and
send a routing device creation request to the VIM, wherein the routing device creation request comprises the information about the routing device, and the VNFs are connected to the layer 3 links through the routing device.

13. The apparatus according to claim 12, wherein the sending module is specifically configured to:
send a device creation request to the VIM, wherein the device creation request comprises configuration information and/or an identifier; and
send a resource update request to the VIM, wherein the resource update request comprises the information about the layer 3 links, and is used to add the layer 3 links to the routing device.

14. The apparatus according to any one of claims 10 to 13, wherein the receiving module is further configured to:
receive an NS update request, wherein the NS update request is used to update the NS, and the NS update request comprises an identifier of an updated NSD file corresponding to the NS;
the obtaining module is further configured to: obtain the updated NSD file based on the identifier of the updated NSD file, wherein the updated NSD file comprises an updated VLD file and information about a VNF associated with the updated VLD file, and the updated VLD file comprises an updated layer 2 link and/or an updated layer 3 link; and
the sending module is further configured to: update, based on the updated NSD file, a connection relationship between the VNFs comprised in the NS.

15. The apparatus according to claim 14, wherein the information about the VNF associated with the updated VLD file comprises information about an external interface of the VNF connected to the updated layer 2 link and/or information about an external interface of the VNF connected to the updated layer 3 link.

16. The apparatus according to claim 15, wherein the sending module is specifically configured to:
send a second layer 2 link creation request to the VIM, wherein the second layer 2 link creation request comprises an identifier of the updated layer 2 link;
send a second layer 3 link creation request to the VIM, wherein the second layer 3 link creation request comprises an identifier of the updated layer 3 link and the identifier of the corresponding updated layer 2 link; and
send a VNF connection update request to the VNFM, wherein the VNF connection update request comprises the identifier of the updated layer 2 link, the identifier of the updated layer 3 link, and the information about the VNF associated with the updated VLD file, so that the VNFM updates, based on the VNF connection update request, the connection relationship between the VNFs that needs to be updated.

17. A virtualized network service deployment apparatus, comprising a processor, wherein the processor is configured to be coupled to a memory, and read and execute instructions in the memory, to implement the method according to any one of claims 1 to 9.

18. A readable storage medium, comprising program or instructions, wherein when the program or the instructions are executed, the method according to any one of claims 1 to 9 is performed.

19. A computer program product, comprising computer-readable instructions, wherein when a communications apparatus reads and executes the computer-readable instructions, the communications apparatus performs the method according to any one of claims 1 to 9.
